# EUROPÄISCHE PATENTSCHRIFT

(11) **EP 2 775 603 B1**
(45) Veröffentlichungstag und Bekanntmachung des Hinweises auf die Patenterteilung: **14.02.2018**
(21) Anmeldenummer: 13157800.7
(22) Anmeldetag: 05.03.2013
(51) Int. Cl.: H02M 5/45, H02M 7/48, H02M 7/5387

(54) **Verfahren zum Betrieb einer Antriebssteuerungseinrichtung und nach dem Verfahren arbeitende Antriebssteuerungseinrichtung**
Method for operating a drive control device and drive control device operating by the method
Procédé destiné au fonctionnement d'un dispositif de commande d'entraînement et dispositif de commande d'entraînement fonctionnant selon ce procédé

(43) Veröffentlichungstag der Anmeldung: 10.09.2014
(73) Patentinhaber: Siemens Aktiengesellschaft, 80333 München (DE)
(72) Erfinder: Nieberlein, Klaus, 90471 Nürnberg (DE)

(56) Entgegenhaltungen:
- EP-A1- 2 525 486

## Beschreibung

Die Erfindung betrifft ein Verfahren zum Betrieb einer Antriebssteuerungseinrichtung und eine nach dem Verfahren arbeitende Antriebssteuerungseinrichtung sowie ein Computerprogramm zur Implementation des Verfahrens und damit auch eine Antriebssteuerungseinrichtung mit Mitteln zur Ausführung eines solchen Computerprogramms. Speziell betrifft die Erfindung ein Verfahren zum Betrieb einer Antriebssteuerungseinrichtung, wobei die Antriebssteuerungseinrichtung einen Wechselrichter aufweist und wobei der Wechselrichter durch Ansteuersignale ansteuerbare Halbleiterschalter umfasst.

Derartige Antriebssteuerungseinrichtungen sind an sich bekannt, zum Beispiel aus der EP 2 525 486 A1. Die Besonderheit der in der EP 2 525 486 A1 vorgeschlagenen Lösung besteht darin, dass zur Vermeidung von Störungen die auf der Niederspannungsseite generierten Ansteuersignale während der zwischen einzelnen Schaltpunkten der Halbleiterschalter verbleibenden Schaltpausen zur Hochspannungsseite übertragen werden.

Ein Wechselrichter - lastseitiger Wechselrichter -einer Antriebssteuerungseinrichtung erzeugt zum Beispiel aufgrund der Ansteuerung durch die Ansteuersignale eine Ausgangsspannung mit variabler Frequenz und Spannung. Dadurch kann die Drehzahl und das Drehmoment zum Beispiel eines Elektromotors als Last der Antriebssteuerungseinrichtung eingestellt und geregelt werden. Beim generatorischen Betrieb eines Elektromotors wird mit einem netzseitigen Wechselrichter der zurückzuspeisende Strom entsprechend der Netzfrequenz bereitgestellt. Auch dies erfolgt durch eine Ansteuerung des netzseitigen Wechselrichters mit auf der jeweiligen Netzfrequenz basierenden, geeigneten Ansteuersignalen (grundfrequenter Betrieb).

Bei der Kommutierung solcher Antriebssteuerungseinrichtungen, nämlich des grundfrequent betriebenen netzseitigen Wechselrichters, kommt es im generatorischen Betrieb im Zusammenhang mit einer Beendigung der Kommutierung zu einem starken Spannungseinbruch auf derjenigen Phase, die den Strom nicht mehr weiter führt. Der Strom, der in die Netzinduktivität eingeprägt ist, entlädt den netzseitigen Kondensator der entsprechenden Phase, der gemäß der üblichen Terminologie im Folgenden auch als F3E Kondensator (F3E oder F3E = Fundamental Frequency Front End = grundfrequent betriebener netzseitiger Wechselrichter) bezeichnet wird. Der Entladevorgang des betreffenden F3E Kondensators dauert so lange an, bis der in die Netzinduktivität der entsprechenden Phase eingeprägte Strom abgeklungen ist.

Ein solcher Spannungseinbruch ist aber nur bis zu einem Maximalwert zulässig und mit der Netzinduktivität und der Kapazität der angeschlossenen Last oder Lasten ergibt sich ein schwingfähiges System, das durch den Spannungseinbruch zu Schwingungen angeregt wird. Ist der Spannungseinbruch sehr groß, kann dadurch eine Schwingung angeregt werden, die bei F3E Schaltungen sogar zu einer Fehlkommutierung führt.

Bisher hat man versucht, dieses Problem durch eine deutliche Vergrößerung der Kapazität der F3E Kondensatoren zu vermeiden. Durch die Erhöhung von deren Kapazität ist es möglich, die Spannungseinbrüche so weit zu reduzieren, dass die durch die Kommutierung entstehende Schwingung abgemildert wird. Die damit erreichbare Verringerung der sich im Zusammenhang mit der Kommutierung ergebenden Schwingung bewirkt, dass es zu keiner Fehlkommutierung mehr kommt und der Spannungseinbruch innerhalb vorgegebener Grenzwerte bleibt.

Allerdings ist mit der Erhöhung der Kapazität der F3E Kondensatoren sowohl eine Erhöhung des im Betrieb sich ergebenden Blindstromanteils wie auch eine Erhöhung des Platzbedarfs einer solche F3E Kondensatoren umfassenden Antriebssteuerungseinrichtung verbunden.

Eine Aufgabe der Erfindung besteht entsprechend darin, ein weiteres Verfahren zum Betrieb einer Antriebssteuerungseinrichtung und eine nach dem Verfahren arbeitende Antriebssteuerungseinrichtung anzugeben. Eine spezielle Aufgabe der Erfindung besteht im Weiteren darin, ein solches Verfahren und eine verfahrensgemäß arbeitende Vorrichtung anzugeben, das bzw. die die oben skizzierten Nachteile vermeidet und entsprechend dazu führt, dass sich auch mit vergleichsweise klein dimensionierten F3E Kondensatoren keine oder nur eine handhabbare Schwingungsneigung ergibt.

Diese Aufgabe wird erfindungsgemäß mit einem Verfahren mit den Merkmalen des Anspruchs 1 oder einer nach dem Verfahren arbeitenden Vorrichtung gelöst. Dazu ist bei einem Verfahren zum Betrieb einer Antriebssteuerungseinrichtung, welche zumindest einen Wechselrichter, nämlich zumindest einen netzseitigen Wechselrichter, mit durch Ansteuersignale ansteuerbaren Halbleiterschaltern umfasst, wobei eine Ansteuerlogik für jedes Ansteuersignal einen Ansteuersignalzeitpunkt ermittelt und wobei die Ansteuerung jeweils eines Halbleiterschalters durch ein von der Ansteuerlogik zum jeweiligen Ansteuersignalzeitpunkt generiertes Ansteuersignal erfolgt, vorgesehen, dass die Ansteuerung einzelner Halbleiterschalter durch ein entsprechendes Ansteuersignal um eine in Form eines vorgegebenen oder vorgebbaren Vorzündwinkels ausgedrückte Zeitspanne vor dem ermittelten Ansteuersignalzeitpunkt erfolgt.

Als Ansteuersignalzeitpunkte werden dabei Aktivierungszeitpunkte der Halbleiterschalter des Wechselrichters (bei einer Antriebssteuerungseinrichtung mit nur einem Wechselrichter, nämlich einem netzseitigen Wechselrichter) oder des netzseitigen Wechselrichters (bei einer Antriebssteuerungseinrichtung mit zumindest einem ersten und einem zweiten Wechselrichter, nämlich einem netzseitigen Wechselrichter und einem lastseitigen Wechselrichter) verstanden. Zu den Ansteuersignalzeitpunkten werden die Ansteuersignale für die einzelnen Halbleiterschalter generiert, die wiederum die Aktivierung des betreffenden Halbleiterschalters bewirken. Für die Rückspeisung von im generatorischen Betrieb durch die angeschlossene Last erzeugtem Strom basieren die Ansteuersignalzeitpunkte dabei auf der jeweiligen Netzfrequenz.

Die Erfindung geht von der Erkenntnis aus, dass sich durch die im Folgenden als Vorzündung bezeichnete und aufgrund eines Vorzündwinkels größer als Null ergebende, zeitlich vorgezogene Ansteuerung eines Halbleiterschalters ein Kurzschluss der Halbleiterbrücke mit dem vorzeitig (im Vergleich zu dem auf der Netzfrequenz basierenden Ansteuersignalzeitpunkt) gezündeten Halbleiterschalter ergibt. Aufgrund dieser Vorzündung entsteht ein kurzes Zeitfenster, das mit der normalen Kommutierung, also der Deaktivierung des in dieser Halbleiterbrücke bisher aktiven Halbleiterschalters, endet. Während dieses Zeitfensters wird durch den Spannungsabfall zur aktiven Phase ein Strom eingeprägt, so dass der Strom von der aktiven leitenden Phase auf die neue (entsprechend der Vorzündung bereits vor dem normalen Kommutierungszeitpunkt aktive) Phase umkommutieren kann. Im Idealfall verschwindet zum Abschaltpunkt der umkommutierten Phase der Summenstrom aus dem über die Netzinduktivität der jeweiligen Phase abfließenden Strom und dem über die vorzeitig gezündete Phase zufließenden Strom sogar. In diesem Fall wäre der Spannungseinbruch auf der neuen Phase, also derjenigen Phase, dessen Halbleiterschalter entsprechend dem jeweiligen Vorzündwinkel zeitlich früher gezündet wurde, zum Abschaltpunkt der umkommutierten Phase vollständig vermieden.

Der Vorteil der Erfindung besteht damit darin, dass sich durch eine geeignete, insbesondere kontinuierlich automatische Auswahl eines jeweiligen Vorzündwinkels der bisher bei der Beendigung einer Kommutierung beobachtete starke Spannungseinbruch auf der betreffenden Phase reduzieren oder sogar vermeiden lässt, ohne dafür die Kapazität der F3E Kondensatoren erhöhen zu müssen.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Mit dem entsprechend dem Vorzündwinkel generierten Ansteuersignal wird der der nächsten zu kommutierenden Phase zugehörige Halbleiterschalter angesteuert, so dass sich zumindest kurzzeitig, nämlich während einer dem Vorzündwinkel entsprechenden Zeitspanne, ein Kurzschluss der betreffenden Halbleiterbrücke ergibt und damit neben dem aufgrund der Kommutierung demnächst deaktivierten Halbleiterschalter aufgrund der Vorzündung des weiteren Halbleiterschalters in derselben Halbleiterbrücke noch ein weiterer aktiver Strompfad entsteht.

Wenn der Vorzündwinkel von einem in das jeweilige Netz zurückgespeisten Strom oder von einer jeweiligen Netzinduktivität abhängig ist, kann der Vorzündwinkel spezifisch an den jeweiligen Betriebszustand der Antriebssteuerungseinrichtung angepasst werden.

Wenn der Vorzündwinkel von einem Spannungseinbruch auf einer jeweils abkommutierten Phase abhängig ist, kann der Vorzündwinkel spezifisch auch an den durch den Spannungseinbruch auf der jeweils abkommutierten Phase charakterisierten Betriebszustand der Antriebssteuerungseinrichtung angepasst werden. Die tatsächliche Schwingungsneigung ist von der (im Vorfeld nicht bekannten) Netzimpedanz und von der ebenfalls nicht bekannten Kapazität der angeschlossenen Last oder weiterer angeschlossener Lasten abhängig. Die Messung des Spannungseinbruchs ist damit diejenige vergleichsweise einfach erhältliche Größe, die eine Aussage über das Maß der Schwingungsneigung erlaubt und damit als Anhalt für eine Bestimmung des Vorzündwinkels dienen kann.

Eine vergleichsweise einfache Möglichkeit zur Anpassung des Vorzündwinkels an den Spannungseinbruch auf einer jeweils abkommutierten Phase besteht darin, dass der Spannungseinbruch auf der jeweils abkommutierten Phase gemessen wird und sich der Vorzündwinkel aus einem diesbezüglichen Messwert ergibt. Der Messwert ist dann mit einem resultierenden Vorzündwinkel verknüpft, zum Beispiel durch eine mit einer Verstärkerschaltung oder dergleichen implementierte Relation zwischen Messwert und resultierendem Vorzündwinkel oder in Form einer sogenannten Look-Up Tabelle (LUT = look-up-table) oder in Form eines in Software implementierten und von einem von der Antriebssteuerungseinrichtung im Betrieb ausgeführten Computerprogramm umfassten mathematischen Zusammenhangs.

Bei einer besonderen Ausführungsform des Verfahrens ist vorgesehen, dass ein Spannungseinbruch auf einer jeweils abkommutierten Phase gemessen wird und sich der Vorzündwinkel in Abhängigkeit von dem in das Netz zurückgespeisten Strom und dem jeweiligen Spannungseinbruch ergibt. Dann ergibt sich bei der Steuerung des Vorzündwinkels eine Abhängigkeit von zumindest einer weiteren den Betriebszustand der Antriebssteuerungseinrichtung ausdrückenden Größe. Auch diese Abhängigkeit und damit die automatische Erzeugung des Vorzündwinkels lässt sich mit einer analogen Schaltung, einer LUT oder einer in Software implementierten Formulierung eines mathematischen Zusammenhangs zwischen den jeweils berücksichtigten Einflussgrößen und dem resultierenden Zündwinkel ausdrücken.

Eine besonders bevorzugte Ausführungsform des Verfahrens besteht darin, dass der Vorzündwinkel Ergebnis eines Regelungsverfahrens auf Basis des gemessenen Spannungseinbruchs und dem in das Netz zurückgespeisten Strom ist. Dann kann der jeweils ermittelte Vorzündwinkel von Zyklus zu Zyklus optimiert werden. Als Regelgröße kommt das Maß des Spannungseinbruchs der abgeschalteten (kommutierten) Phase oder das Maß der Spannungsüberhöhung der entsprechend dem Vorzündwinkel vorzeitig zugeschalteten Phase zum Kommutierungszeitpunkt in Betracht. Als Führungsgröße kommen eine vorgegebene maximale Schwingungsamplitude oder vorgegebene Maximalwerte für den Spannungseinbruch bzw. die Spannungsüberhöhung in Betracht.

Der Regelkreis kann einen P-Regler, einen PI-Regler oder einen PID-Regler an sich bekannter Art umfassen.

Eine Möglichkeit zum Erhalt eines Werts für den in das Netz zurückgespeisten Strom besteht in Form einer separaten Strommessung oder indem ein diesbezüglicher Wert aus der Antriebssteuerungseinrichtung ausgelesen wird.

Die oben genannte Aufgabe wird auch mit einer Antriebssteuerungseinrichtung gelöst, die nach dem Verfahren wie hier und im Folgenden beschrieben arbeitet und dazu Mittel zur Durchführung des Verfahrens umfasst. Die Erfindung ist dabei bevorzugt in Software oder in Soft- und Firmware implementiert. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch eine Antriebssteuerungseinrichtung, mit einer Verarbeitungseinrichtung in Form von oder nach Art eines Mikroprozessors und einem Speicher als Mittel zur Durchführung des Verfahrens, wobei in den Speicher als weiteres Mittel zur Durchführung des Verfahrens und seiner Ausgestaltungen ein solches Computerprogramm geladen oder ladbar ist. Ein für ein solches Computerprogramm in Betracht kommender Ort ist zum Beispiel die Ansteuerlogik.

Vorteilhafte Ausgestaltungen der Vorrichtung sind Gegenstand der auf den zweiten unabhängigen Anspruch rückbezogenen Unteransprüche oder ergeben sich aus einer Umsetzung einzelner oder mehrerer Merkmale des ersten unabhängigen Anspruchs und der darauf rückbezogenen Ansprüche, insbesondere einer Implementation der jeweiligen Verfahrensaspekte in Form von Soft- und/oder Firmware.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- FIG 1: eine Antriebssteuerungseinrichtung mit einem Wechselrichter auf einer Hochspannungsseite und einer Ansteuerlogik zur Generierung von Ansteuersignalen für den Wechselrichter auf einer Niederspannungsseite,
- FIG 2: eine grundsätzlich an sich bekannte Schaltung einer Antriebssteuerungseinrichtung gemäß FIG 1,
- FIG 3: ein Raumzeigerdiagramm,
- FIG 4: ein Oszillogramm zur Veranschaulichung von beim Abkommutieren einer Phase eines netzseitigen Wechselrichters resultierenden Schwingungen,
- FIG 5: ein Oszillogramm gemäß FIG 4 bei einer nach dem hier beschriebenen Ansatz betriebenen Antriebssteuerungseinrichtung und
- FIG 6: ein weiteres Oszillogramm gemäß FIG 4 bei einer nach dem hier beschriebenen Ansatz betriebenen Antriebssteuerungseinrichtung.

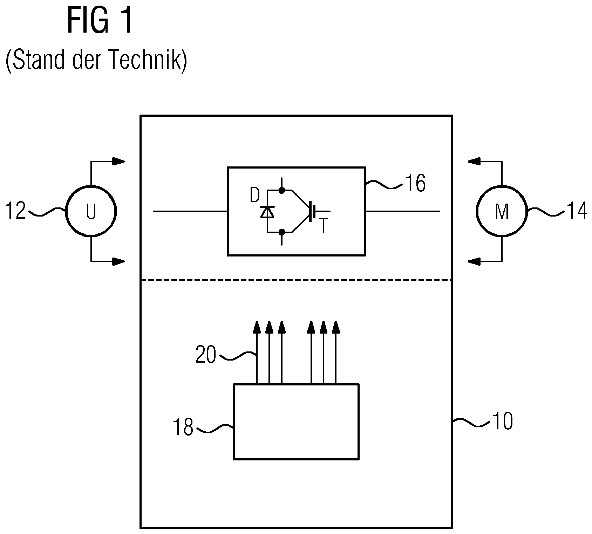

FIG 1 zeigt schematisch vereinfacht eine Antriebssteuerungseinrichtung 10, die eingangsseitig an eine Spannungsquelle 12 angeschlossen oder anschließbar ist und an die ausgangsseitig eine Last angeschlossen oder anschließbar ist. Bei der angeschlossenen Last handelt es sich zum Beispiel um einen drehzahlgeregelten Elektromotor 14. Die Antriebssteuerungseinrichtung 10 umfasst einen Wechselrichter 16 mit einer nur schematisch dargestellten, mit steuerbaren Halbleiterschaltern T und antiparallelen Dioden D bestückten, an sich bekannten Brückenschaltung, insbesondere in einer Ausführung als IGBT-B6-Brücke.

Für die Drehzahlregelung von zum Beispiel Elektromotoren 14 als Last, aber auch für den Rückspeisefall und den generatorischen Betrieb eines Elektromotors 14, erzeugt der Wechselrichter 16 in an sich bekannter Art aus einer Zwischenkreisgleichspannung oder einem Zwischenkreisgleichstrom durch geeignetes Schalten der Halbleiterschalter T eine Ausgangsspannung mit variabler Frequenz und Spannung bzw. eine Rückspeisespannung mit der jeweiligen Netzfrequenz.

Für den hier vorgestellten Ansatz ist allerdings nur ein netz- oder eingangsseitiger Wechselrichter 16 relevant, so dass zum Beispiel auch der Fall umfasst ist, dass an den Zwischenkreis oder auch ohne Zwischenkreis direkt an den Wechselrichter eine Gleichstrommaschine angeschlossen ist.

Wenn im Folgenden auf einen Wechselrichter 16 Bezug genommen wird, ist damit bei einer Antriebssteuerungseinrichtung 10, die sowohl einen netzseitigen (eingangsseitigen) Wechselrichter 16 wie auch einen lastseitigen (ausgangsseitigen) Wechselrichter umfasst, stets der netzseitige Wechselrichter 16 gemeint und wenn auf steuerbare Halbleiterschalter T Bezug genommen wird, sind stets die Halbleiterschalter T des netzseitigen Wechselrichters 16 gemeint.

Zur Ansteuerung der Halbleiterschalter T des Wechselrichters 16 ist eine Ansteuerlogik 18 vorgesehen. Die Ansteuerlogik 18 erzeugt für jeden Halbleiterschalter T ein Ansteuersignal 20, das dem jeweiligen Halbleiterschalter T zugeführt wird. Der Wechselrichter 16 gehört zu einer Hochspannungsseite der Antriebssteuerungseinrichtung 10. Die Ansteuerlogik 18 gehört demgegenüber zu einer Niederspannungsseite der Antriebssteuerungseinrichtung 10. Hochspannungs- und Niederspannungsseite sind in der Darstellung durch eine gestrichelte Linie getrennt und üblicherweise ist zwischen der Hochspannungs- und Niederspannungsseite eine Potentialtrennung vorgesehen.

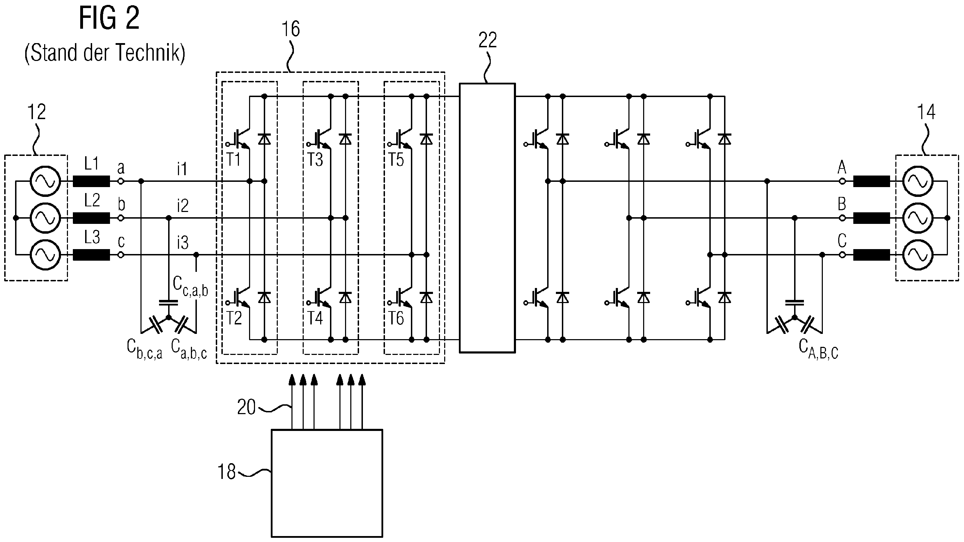

Die Darstellung in FIG 2 zeigt mit weiteren Details eine grundsätzlich an sich bekannte Schaltung (vgl. zum Beispiel: HÜTTE Taschenbücher der Technik; Elektrische Energietechnik, Band 2 - Geräte, 29. Aufl., Springer-Verlag, 1978, dort Kapitel 1.3: "Stromrichterschaltung, -geräte und -anlagen") einer Antriebssteuerungseinrichtung 10 mit dem erwähnten netzseitigen Wechselrichter 16 und den davon umfassten Halbleiterschaltern T, die zur eindeutigen Referenzierung mit T1, T2, T3, T4, T5 und T6 bezeichnet sind. Im Anschluss an den netzseitigen Wechselrichter 16 umfasst die Schaltung in an sich bekannter Art und Weise einen Zwischenkreis 22, zum Beispiel einen Stromzwischenkreis oder einen Spannungszwischenkreis. Auf den in der Darstellung in FIG 2 auf den Zwischenkreis 22 folgenden lastseitigen Wechselrichter kommt es - wie bereits erwähnt - nicht an. Eingangsseitig sind die Netzinduktivitäten L1, L2, L3 dargestellt und der Strom in jeder Phase ist mit i1, i2 und i3 bezeichnet. Die an einem Sternpunkt zusammengeschlossenen F3E Kondensatoren sind mit C_{a,b,c,} C_{b,c,a} und C_{c,a,b} bezeichnet und stellen die Kapazitäten zwischen den mit a, b und c bezeichneten Punkten dar. Beim generatorischen Betrieb des Elektromotors 14 ist die Richtung der Ströme i1, i2, i3 (Rückspeisestrom) in Richtung auf die Quelle 12.

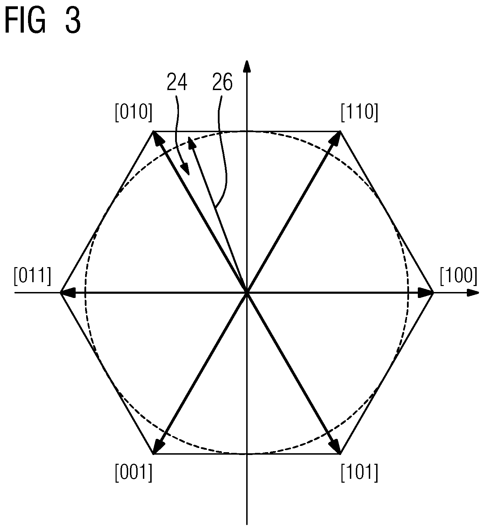

Die Darstellung in FIG 3 zeigt ein an sich bekanntes Raumzeigerdiagramm mit den üblichen sechs Grundzuständen. Jeder Grundzustand ist mit einer bestimmten Stellung der Halbleiterschalter T1-T6 des (netzseitigen) Wechselrichters 16 assoziiert. Der hier mit "[1 1 0]" bezeichnete Zustand bedeutet zum Beispiel eine Aktivierung der Halbleiterschalter T1, T3 und T6 und eine Deaktivierung der Halbleiterschalter T5, T2 und T4. Bei einer Umkommutierung, also beim Erreichen des Zustands "[ 0 1 0 ]" erfolgt unter anderem eine Deaktivierung des Halbleiterschalters T1 (Abkommutierung) und insgesamt bedeutet dieser Zustand eine Aktivierung der Halbleiterschalter T3, T2 und T6 sowie eine Deaktivierung der Halbleiterschalter T1, T5 und T4.

Nach dem Abschalten (Deaktivieren) des Halbleiterschalters T1 führt die Phase mit der Netzinduktivität L1 den Strom nicht mehr weiter. Der Strom i1, der bis zum Abschalten des Halbleiterschalters T1 der dortigen Netzinduktivität L1 eingeprägt ist, führt allerdings zu einer Entladung des F3E Kondensators C_{b,c,a}. Diese Entladung dauert so lange an, bis der bisher der Netzinduktivität L1 eingeprägte Strom i1 abgeklungen ist. Dies führt zu dem bisher beobachteten Spannungseinbruch, der, wenn er eine bestimmte Größe erreicht, unerwünscht ist und sogar zu einer Fehlkommutierung führt.

Eine Vorzündung der eingangs beschriebenen Art bezieht sich demnach bei dem hier exemplarisch herausgegriffenen Wechsel von dem mit "[1 1 0]" bezeichneten Zustand zu dem mit "[0 1 0 ]" bezeichneten Zustand auf den mit T2 bezeichneten Halbleiterschalter. Normalerweise erfolgt beim Zustandswechsel zum Kommutierungszeitpunkt eine Deaktivierung des ersten Halbleiterschalters T1 und eine gleichzeitige Aktivierung des in derselben Halbleiterbrücke befindlichen zweiten Halbleiterschalters T2. Im Rahmen der Vorzündung erfolgt die Aktivierung des zweiten Halbleiterschalters T2 bereits vor dem Kommutierungszeitpunkt, also zu einem Zeitpunkt, zu dem auch der erste Halbleiterschalter T1 noch aktiviert ist. Der Zeitpunkt, zu dem diese Vorzündung erfolgt, wird durch den jeweiligen Vorzündwinkel bestimmt und die Darstellung des Raumzeigerdiagramms in FIG 3 gibt eine gute Vorstellung vom Vorzündwinkel 24. Demnach ist der Vorzündwinkel 24 der Abstand zwischen dem Raumzeiger 26 und dem nächsten Kommutierungszeitpunkt. Sobald für einen Halbleiterschalter T1-T6 der Bereich des Vorzündwinkels 24 erreicht ist, erzeugt die Ansteuerlogik 18 ein entsprechendes Ansteuersignal 20 für diesen Halbleiterschalter T1-T6,, so dass dieser schon vor dem eigentlichen Kommutierungszeitpunkt aktiviert wird.

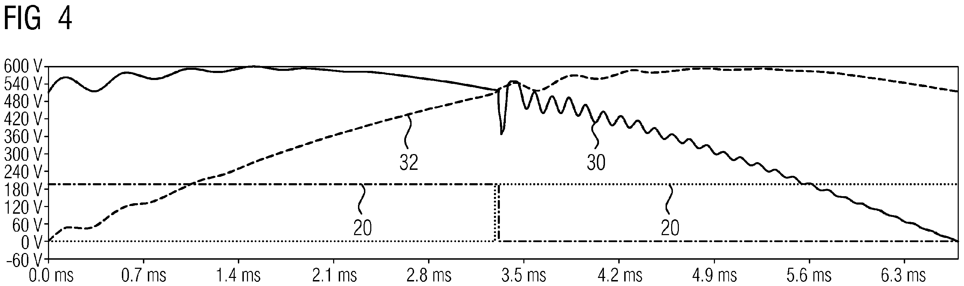

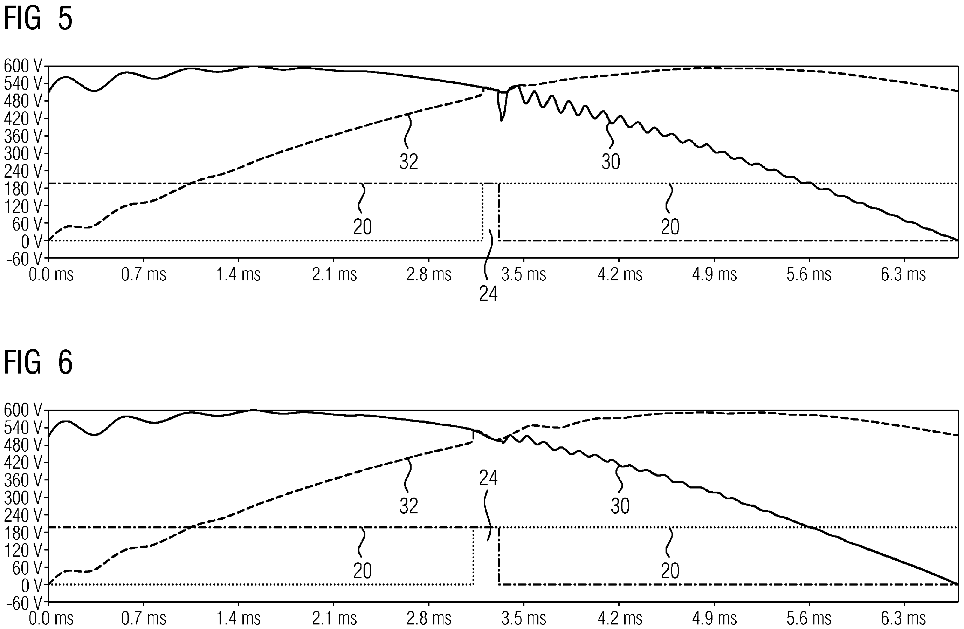

Die Darstellungen in FIG 4, FIG 5 und FIG 6 zeigen eine resultierende Schwingung beim Abkommmutieren einer Phase, nämlich eine Schwingung aufgrund eines zu starken Spannungseinbruchs auf der abkommutierten Phase (FIG 4), eine resultierende Schwingung beim Abkommmutieren mit einem kleinen Vorzündwinkel 24 (FIG 5) und eine resultierende Schwingung beim Abkommmutieren mit einem größeren Vorzündwinkel 24 (FIG 6).

Man erkennt die bereits bei einem kleinen Vorzündwinkel 24 (FIG 5) gegenüber einer normalen Kommutierung (FIG 4) reduzierte Schwingungsamplitude und die bei einem größeren Vorzündwinkel 24 (FIG 6) deutlich reduzierte Schwingungsamplitude. Der Vorzündwinkel 24 ist in den Darstellungen in FIG 4, FIG 5 und FIG 6 im Übrigen auch in dem jeweils im unteren Bereich dargestellten Rechtecksignal erkennbar.

Die Darstellung in FIG 4 zeigt demnach die beim Abkommmutieren einer Phase zum normalen Kommutierungszeitpunkt, also entsprechend der grundfrequenten Ansteuerung der Halbleiterschalter, resultierende Schwingung. Der von links oben nach rechts unten verlaufende Graph 30 ist die Spannung der abkommutierten Phase, also derjenigen Phase, die am Kommutierungszeitpunkt abgeschaltet wird. Der von links unten nach rechts oben verlaufende Graph 32 ist die Spannung der aufkommutierten Phase also derjenigen Phase, die am Kommutierungszeitpunkt zugeschaltet wird. Im unteren Bereich der Darstellung in FIG 4 sind die Ansteuersignale 20 der von der betrachteten Kommutierung betroffenen Halbleiterschalter darstellt, und zwar von links nach rechts betrachtet, ein erstes, zunächst auf High-Pegel befindliches Ansteuersignal 20 zur Ansteuerung desjenigen Halbleiterschalters, der zum Kommutierungszeitpunkt deaktiviert wird und ein zweites, zunächst auf Low-Pegel befindliches Ansteuersignal 20 zur Ansteuerung desjenigen Halbleiterschalters, der zum Kommutierungszeitpunkt aktiviert wird. Man erkennt, dass die Aktivierung und Deaktivierung der beiden vom betrachteten Kommutierungszeitpunkt betroffenen Halbleiterschalter (hier also zum Beispiel der beiden in FIG 2 mit T1 und T2 bezeichneten Halbleiterschalter) zeitgleich erfolgt.

Die Darstellungen in FIG 5 zeigen dieselbe Situation wie in FIG 4, allerdings mit einem Vorzündwinkel (FIG 5) und einen größeren Vorzündwinkel (FIG 6).

Der von links oben nach rechts unten verlaufende Graph 30 ist wieder jeweils die Spannung der abkommutierten Phase, also derjenigen Phase, die am Kommutierungszeitpunkt abgeschaltet wird. Der von links unten nach rechts oben verlaufende Graph 32 ist die Spannung der aufkommutierten Phase also derjenigen Phase, die entsprechend dem jeweiligen Vorzündwinkel 24 vor Kommutierungszeitpunkt zugeschaltet wird. Im unteren Bereich der Darstellungen in FIG 5 und FIG 6 sind die Ansteuersignale 20 der von der betrachteten Kommutierung betroffenen Halbleiterschalter darstellt, und zwar von links nach rechts betrachtet, ein erstes, zunächst auf High-Pegel befindliches Ansteuersignal 20 zur Ansteuerung desjenigen Halbleiterschalters, der zum Kommutierungszeitpunkt deaktiviert wird und ein zweites, zunächst auf Low-Pegel befindliches Ansteuersignal 20 zur Ansteuerung desjenigen Halbleiterschalters, der entsprechend dem jeweiligen Vorzündwinkel 24 vor dem Kommutierungszeitpunkt aktiviert wird. Der Vorzündwinkel 24 ist also der Abstand zwischen der steigenden Flanke des früher generierten Ansteuersignals 20 und der fallenden Flanke des zum normalen Kommutierungszeitpunkt generierten Ansteuersignals 20.

Man erkennt, dass die Aktivierung und Deaktivierung der beiden vom betrachteten Kommutierungszeitpunkt betroffenen Halbleiterschalter (hier also zum Beispiel der beiden in FIG 2 mit T1 und T2 bezeichneten Halbleiterschalter) aufgrund des jeweiligen Vorzündwinkels 24 zu unterschiedlichen Zeitpunkten erfolgt. Des Weiteren erkennt man die die reduzierte Schwingung auf der abkommutierten Phase (erster Graph 30), wobei die resultierende Schwingung bei dem in FIG 6 gezeigten, größeren Vorzündwinkel 24 auch im Vergleich zu dem in FIG 5 gezeigten Vorzündwinkel 24 nochmals reduziert ist.

Einzelne im Vordergrund stehende Aspekte der hier eingereichten Beschreibung lassen sich damit kurz wie folgt zusammenfassen:
Es wird ein Verfahren zum rückspeisenden Betrieb einer Antriebssteuerungseinrichtung 10, welche einen Wechselrichter 16 mit durch Ansteuersignale 20 ansteuerbaren Halbleiterschaltern T1-T6 umfasst, wobei eine Ansteuerlogik 18 für jedes Ansteuersignal 20 einen Ansteuersignalzeitpunkt ermittelt und wobei die Ansteuerung jeweils eines Halbleiterschalters T1-T6 durch ein von der Ansteuerlogik 18 zum jeweiligen Ansteuersignalzeitpunkt generiertes Ansteuersignal 20 erfolgt, angegeben, bei dem die Ansteuerung einzelner Halbleiterschalter T1-T6 durch ein entsprechendes Ansteuersignal 20 um einen vorgegebenen oder vorgebbaren Vorzündwinkel 24 vor dem ermittelten Ansteuersignalzeitpunkt erfolgt.

## Patentansprüche

1. Verfahren zum rückspeisenden Betrieb einer Antriebssteuerungseinrichtung (10), welche einen Wechselrichter (16) mit durch Ansteuersignale (20) ansteuerbaren Halbleiterschaltern (T1-T6) umfasst,
wobei eine Ansteuerlogik (18) für jedes Ansteuersignal (20) einen Ansteuersignalzeitpunkt ermittelt und
wobei die Ansteuerung jeweils eines Halbleiterschalters (T1-T6) durch ein von der Ansteuerlogik (18) zum jeweiligen Ansteuersignalzeitpunkt generiertes Ansteuersignal (20) erfolgt,
**dadurch gekennzeichnet , dass** die Ansteuerung einzelner Halbleiterschalter (T1-T6) durch ein entsprechendes Ansteuersignal (20) um einen vorgegebenen oder vorgebbaren Vorzündwinkel (24) vor dem ermittelten Ansteuersignalzeitpunkt erfolgt.

2. Verfahren nach Anspruch 1, wobei mit dem entsprechend dem Vorzündwinkel (24) generierten Ansteuersignal (20) der der nächsten zu kommutierenden Phase zugehörige Halbleiterschalter (T1-T6) angesteuert wird.

3. Verfahren nach Anspruch 1 oder Anspruch 2, wobei der Vorzündwinkel (24) von einem in das jeweilige Netz zurückgespeisten Strom oder von einer jeweiligen Netzinduktivität (L1, L2, L3) abhängig ist.

4. Verfahren nach Anspruch 1, 2 oder 3, wobei der Vorzündwinkel (24) von einem Spannungseinbruch auf einer jeweils abkommutierten Phase abhängig ist.

5. Verfahren nach Anspruch 4, wobei der Spannungseinbruch auf einer jeweils abkommutierten Phase gemessen wird und sich der Vorzündwinkel (24) aus einem diesbezüglichen Messwert ergibt.

6. Verfahren nach Anspruch 3 und einem der Ansprüche 4 oder 5, wobei ein Spannungseinbruch auf einer jeweils abkommutierten Phase gemessen wird und sich der Vorzündwinkel (24) in Abhängigkeit von dem in das Netz zurückgespeisten Strom und dem jeweiligen Spannungseinbruch ergibt.

7. Verfahren nach Anspruch 6, wobei der Vorzündwinkel (24) Ergebnis eines Regelungsverfahrens auf Basis des gemessenen Spannungseinbruchs und dem in das Netz zurückgespeisten Strom ist.

8. Verfahren nach einem der Ansprüche 3 bis 7, wobei sich ein Wert für den in das Netz zurückgespeisten Strom aus einer Strommessung oder aus der Antriebssteuerungseinrichtung (10) ergibt.

9. Antriebssteuerungseinrichtung mit einer Ansteuerlogik (18) als Mittel zur Ausführung des Verfahrens nach einem der Ansprüche 1 bis 8,
wobei mit der Ansteuerlogik (18) Ansteuersignalzeitpunkte zur Ansteuerung der Halbleiterschalter (T1-T6) der Antriebssteuerungseinrichtung (10) ermittelbar und ausgehend davon Ansteuersignale (20) zur Ansteuerung der Halbleiterschalter (T1-T6) generierbar sind,
wobei durch die Ansteuerlogik (18) ein Vorzündwinkel (24) zur vorzeitigen Ansteuerung einzelner Halbleiterschalter (T1-T6) ermittelbar ist und
wobei durch die Ansteuerlogik (18) entsprechend den jeweiligen Ansteuersignalzeitpunkten und dem jeweiligen Vorzündwinkel (24) ein Ansteuersignal (20) zur Ansteuerung der Halbleiterschalter (T1-T6) generierbar ist.

10. Computerprogramm mit Programmcodemitteln zur Implementation eines Verfahrens gemäß einem der Ansprüche 1 bis 8.

11. Antriebssteuerungseinrichtung (10) nach Anspruch 9 und mit einer Verarbeitungseinheit und einem Speicher, in den ein Computerprogramm nach Anspruch 10 geladen oder ladbar ist, das beim Betrieb der Antriebssteuerungseinrichtung (10) durch dessen Verarbeitungseinheit ausgeführt wird oder ausführbar ist und unter dessen Kontrolle einzelne Halbleiterschalter (T1-T6) entsprechend einem jeweils automatisch ermittelten Vorzündwinkel vorzeitig aktiviert werden oder aktivierbar sind.

## Claims

1. Method for the regenerative operation of a drive control facility (10) having an inverter (16) comprising semiconductor switches (T1-T6) which can be controlled by means of control signals (20),
wherein a control logic (18) determines a control signal time instant for each control signal (20) and
wherein the control of a semiconductor switch (T1-T6) takes place in each instance by means of a control signal (20) generated by the control logic (18) at the respective control signal time instant,
**characterised in that**, the control of individual semiconductor switches (T1-T6) takes place by means of a corresponding control signal (20) about a predetermined or predeterminable pre-ignition angle (24) prior to the determined control signal time instant.

2. Method according to claim 1, wherein the semiconductor switches (T1-T6) associated with the next phase to be commutated is controlled with the control signal (20) generated in accordance with the pre-ignition angle (24).

3. Method according to claim 1 or claim 2, wherein the pre-ignition angle (24) is dependent on a current fed back into the respective grid or on a respective grid inductance (L1, L2, L3).

4. Method according to claim 1, 2, or 3, wherein the pre-ignition angle (24) is dependent on a voltage dip at a respectively down-commutated phase.

5. Method according to claim 4, wherein the voltage dip at a respectively down-commutated phase is measured and the pre-ignition angle (24) is produced from a measured value in this regard.

6. Method according to claim 3, and one of claims 4 or 5, wherein a voltage dip at a respectively down-commutated phase is measured and the pre-ignition angle (24) results as a function of the current fed back into the grid and the respective voltage dip.

7. Method according to claim 6, wherein the pre-ignition angle (24) is a result of a regulation method based on the measured voltage dip and the current fed back into the grid.

8. Method according to one of claims 3 to 7, wherein a value is produced for the current fed back into the network from a current measurement or the drive control facility (10).

9. Drive control facility with a control logic (18) as means to execute the method according to one of claims 1 to 8,
wherein control signal time instants for controlling the semiconductor switches (T1-T6) of the drive control facility (10) can be determined with the control logic (18) and on this basis control signals (20) can be generated to control the semiconductor switches (T1-T6),
wherein by means of the control logic (18), a pre-ignition angle (24) can be determined so as to prematurely control individual semiconductor switches (T1-T6) and
wherein a control signal (20) for controlling the semiconductor switches (T1-T6) can be generated by the control logic (18) according to the respective control signal time instants and the respective pre-ignition angle (24).

10. Computer program having program code means for implementing a method according to one of claims 1 to 8.

11. Drive control facility (10) according to claim 9 and with a processing unit and a storage device, into which a computer program according to claim 10 is or can be loaded, which is or can be executed during operation of the drive control facility (10) by means of its processing unit and under the control thereof individual semiconductor switches (T1-T6) are or can be activated promptly according to a pre-ignition angle determined automatically in each instance.

## Revendications

1. Procédé de fonctionnement avec alimentation en retour d'un dispositif (10) de commande d'entraînement, qui comprend un onduleur (16) ayant des interrupteurs (T1 à T6) à semi-conducteur, qui peuvent être excités par des signaux (20) d'excitation,
dans lequel une logique (18) d'excitation détermine, pour chaque signal (20) d'excitation, un instant de signal d'excitation et
dans lequel l'excitation de respectivement un interrupteur (T1 à T6) à semi-conducteur s'effectue par un signal (20) d'excitation produit par la logique d'excitation à l'instant de signal d'excitation,
**caractérisé en ce que** l'excitation des divers interrupteurs (T1 à T6) à semi-conducteur s'effectue par un signal (20) d'excitation correspondant, d'un angle (24) de pré-amorçage, donné à l'avance ou pouvant l'être, avant l'instant de signal d'excitation déterminé.

2. Procédé suivant la revendication 1, dans lequel on excite, par le signal (20) d'excitation produit conformément à l'angle (24) de pré-amorçage, l'interrupteur (T1 à T6) à semi-conducteur associé à la phase à commuter venant immédiatement ensuite.

3. Procédé suivant la revendication 1 ou revendication 2, dans lequel l'angle (24) de pré-amorçage dépend d'un courant réinjecté dans le réseau ou d'une inductance (L1, L2, L3) du réseau.

4. Procédé suivant la revendication 1, 2 ou 3, dans lequel l'angle (24) de pré-amorçage dépend d'une chute de tension sur une phase décommutée.

5. Procédé suivant la revendication 4, dans lequel on mesure la chute de tension sur une phase décommutée et on obtient l'angle (24) de pré-amorçage à partir d'une valeur de mesure s'y rapportant.

6. Procédé suivant la revendication 3 et l'une des revendications 4 ou 5, dans lequel on mesure une chute de tension sur une phase décommutée et on obtient l'angle (24) de pré-amorçage en fonction du courant réinjecté dans le réseau et de la chute de tension.

7. Procédé suivant la revendication 6, dans lequel l'angle (24) de pré-amorçage est le résultat d'un procédé de régulation sur la base de la chute de tension mesurée et du courant réinjecté dans le réseau.

8. Procédé suivant l'une des revendications 3 à 7, dans lequel on obtient une valeur du courant réinjecté dans le réseau à partir d'une mesure de courant ou à partir du dispositif (10) de commande d'entraînement.

9. Dispositif de commande d'entraînement, comprenant une logique (18) d'excitation comme moyen de réalisation du procédé suivant l'une des revendications 1 à 8,
dans lequel, par la logique (18) d'excitation, peuvent être déterminés des instants de signal d'excitation pour l'excitation des interrupteurs (T1 à T6) à semi-conducteur du dispositif (10) de commande d'entraînement et, à partir de ceux-là, peuvent être produits des signaux (20) d'excitation pour exciter les interrupteurs (T1 à T6) à semi-conducteur,
dans lequel, par la logique (18) d'excitation, un angle (24) de pré-amorçage peut être déterminé pour l'excitation anticipée des divers interrupteurs (T1 à T6) à semi-conducteur et
dans lequel, par la logique (18) d'excitation, il peut être produit, conformément aux instants de signal d'excitation et à l'angle (24) de pré-amorçage, un signal (20) d'excitation pour exciter les interrupteurs (T1 à T6) à semi-conducteur.

10. Programme d'ordinateur ayant des moyens de code de programme pour la mise en oeuvre d'un procédé suivant l'une des revendications 1 à 8.

11. Dispositif (10) de commande d'entraînement suivant la revendication 9 et comprenant une unité de traitement et une mémoire, dans lequel un programme d'ordinateur, suivant la revendication 10, est chargé ou peut l'être, programme qui est exécuté lors du fonctionnement du dispositif (10) de commande d'entraînement par son unité de traitement ou peut l'être et sous la commande duquel divers interrupteurs (T1 à T6) à semi-conducteur sont activés de manière anticipée, conformément à un angle de pré-amorçage déterminé automatiquement, ou peuvent l'être.
